# EUROPEAN PATENT SPECIFICATION

(11) **EP 3 040 002 B1**
(45) Date of publication and mention of the grant of the patent: **06.12.2017**
(21) Application number: 15154152.1
(22) Date of filing: 06.02.2015
(51) Int. Cl.: A47J 37/06

(54) **GRILL DEVICE**
GRILLVORRICHTUNG
DISPOSITIF DE GRILL

(30) Priority: 30.12.2014 CN 201410840575
(43) Date of publication of application: 06.07.2016
(73) Proprietor: Tsann Kuen (Zhangzhou) Enterprise Co., Ltd., Zhangzhou Fujian 363107 (CN)
(72) Inventor: Li, Chun-Hua, Fujian 363107 (CN); Wu, Qing-Hui, Fujian 363107 (CN)
(74) Representative: Zimmermann, Tankred Klaus

(56) References cited:
- EP-A1- 2 452 598
- WO-A1-2013/155574
- CN-U- 201 612 524
- US-A1- 2012 118 170

## Description

This disclosure relates to a cooking device, more particularly to a grill device.

A conventional grill device usually includes pivotally-connected upper and lower grilling modules provided respectively with upper and lower grilling plates. However, when the upper grilling plate uncovers the lower grilling plate, the heating power provided by the upper and lower grilling plates remains unchanged, and thus may be insufficient to cook the food disposed on the upper and lower grilling plates.

EP 2 452 598 A1 describes a baking device capable of automatically compensating temperature. The baking device includes comprises an upper baking unit, a lower baking unit and a heating circuit. The upper baking unit can be rotatably connected with the lower baking unit and rotated between a firstpositionanda second position. The baking device is in a first state when in the first position, and in a second state when in the second position. The heating circuit includes a heater with one end thereof electrically connected with an electrode of a power supply, a first thermostat with one end thereof electrically connected with the other end of the heater, a second thermostat with one end thereof electrically connected with the other end of the heater, and a conversion switch which connects the other electrode of the power supply with the first thermostat when in the first state and connects the other electrode of the power supply with the second thermostat when in the second state.

It is an object of the present disclosure to provide a grill device capable of cooking food with different powers.

This object is achieved by a grill device according to claim 1.

Other features and advantages of the present disclosure will become apparent in the following detailed description of the embodiment of the disclosure, with reference to the accompanying drawings, in which:
FIG. 1 is a perspective view of an embodiment of a grill device according to the present disclosure for illustrating a second grilling module at a closed position;
FIG. 2 is a perspective view of the embodiment for illustrating the second grilling module at an open position;
FIG. 3 is a block diagram illustrating electrical components of the embodiment;
FIG. 4 is a fragmentary and exploded perspective view for illustrating components of a switching unit of the embodiment;
FIG. 5 is a schematic fragmentary sectional view of the embodiment for illustrating the second grilling module at the open position and the switching unit being triggered; and
FIG. 6 is a schematic sectional view of the embodiment for illustrating the second grilling module at the closed position and the switching unit being released.

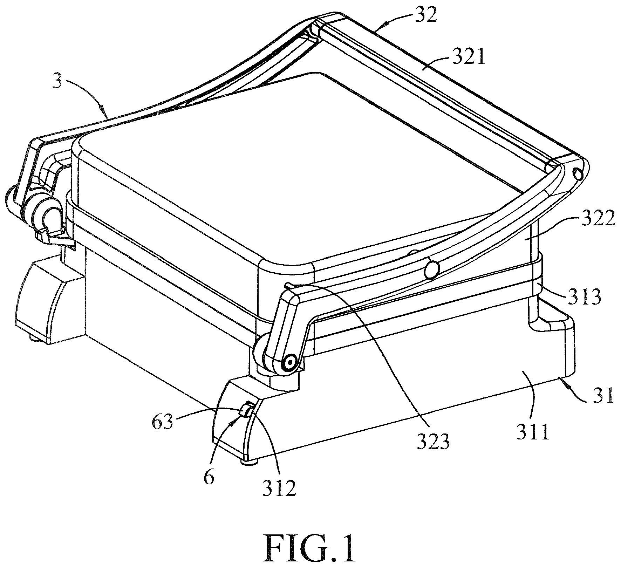

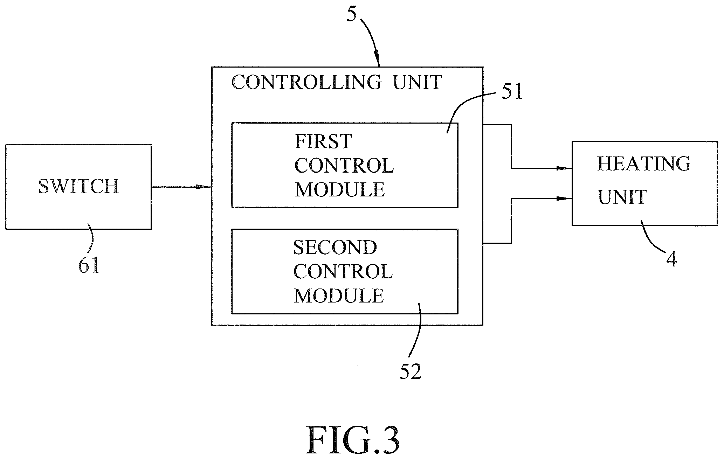

Referring to FIGS. 1 to 3, the embodiment of the grill device according to the present disclosure includes a grilling unit 3, a heating unit 4, a controlling unit 5 and a switching unit 6. The grilling unit 3 includes a first grilling module 31 and a second grilling module 32 . The heating unit 4 is configured for heating the first and second grilling modules 31, 32. Since the feature of this disclosure does not reside in the configuration of the heating unit 4, further details of the same are omitted hereinafter for the sake of brevity.

The first grilling module 31 includes a base housing 311 and a first grilling plate 313. The base housing 311 is formed with a mounting hole 312. The first grilling plate 313 is mounted on the base housing 311.

The second grilling module 32 includes a handle 321, a second grilling plate 322 and a pushing member 323. The handle 321 is pivotally connected to the base housing 311 at a position adjacent to the mounting hole 312, and is user-operable to rotate the second grilling module 32 between a closed position, where the second grilling module 32 covers the first grilling module 31, and an open position, where the second grilling module 32 uncovers the first grillingmodule 31 . In this embodiment, the handle 321 has a U-shaped configuration.

The second grilling plate 322 is mounted fixedly to and co-rotatable with the handle 321, and covers the first grilling plate 313 of the first grilling module 31 when the second grilling module 32 is at the closed position. Note that the second grilling plate 322 can be disposed horizontally to the first grilling plate 313 for cooking food placed thereon when the second grilling module 32 is disposed at the open position. The pushing member 323 is mounted on the handle 321 for pushing the switching unit 6.

The controlling unit 5 is mounted in the base housing 311, is electrically connected to the heating unit 4, and includes first and second control modules 51, 52. The first control module 51 is configured for enabling the heating unit 4 to heat the first and second grilling plates 313, 322 with a first heating power. The second control module 52 is configured for enabling the heating unit 4 to heat at least the first grilling plate 313 with a second heating power that is greater than the first heating power. In this embodiment, the second control module 52 is configured for enabling the heating unit 4 to heat the first and second grilling plates 313, 322 with the second heating power.

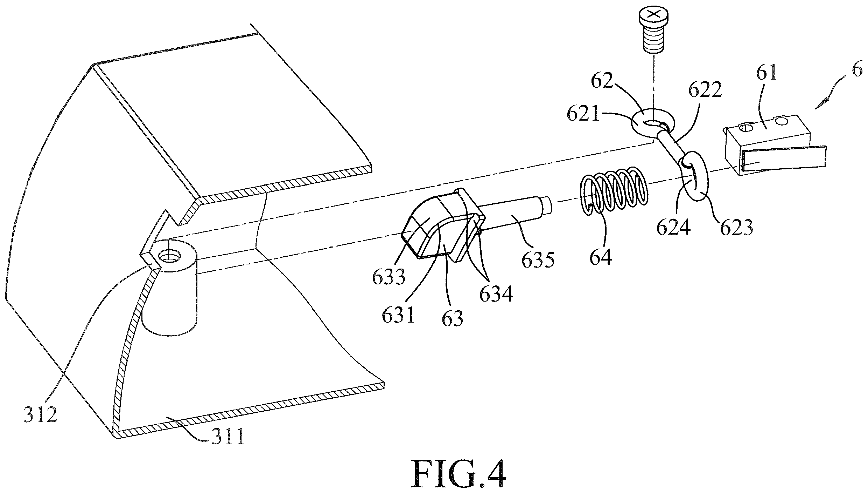

Further referring to FIGS. 4 to 6, the switching unit 6 is disposed at the base housing 311, is electrically connected to the controlling unit 5, and includes a switch 61, a guiding element 62, a trigger element 63 and a biasing member 64. The switch 61 is configured for alternatively turning on the first and second control modules 51, 52. Specifically, the switch 61 is configured to turn on the second control module 52 and turn off the first control module 51 when the second grilling module 32 is at the open position, and to turn on the first control module 51 and turn off the second control module 52 when the second grilling module 32 is not at the open position. In this embodiment, the switch 61 is a micro-switch, and the disclosure is not limited to this aspect.

The guiding element 62 includes a connecting segment 621, an interconnecting segment 622 and a directing segment 623. The connecting segment 621 is connected stably to the base housing 311. The interconnecting segment 622 interconnects the connecting segment 621 and the directing segment 623. The directing segment 623 defines a guiding hole 624.

The trigger element 63 includes a button 631, a flange portion 634 and a rod 635. The button 631 is exposed outwardly of the base housing 311 from the mounting hole 312, and has a curved surface 633 facilitating the pushing member 323 of the second grilling module 32 to glidingly push the button 631 to move toward the switch 61. The rod 635 is connected to the button 631, and extends through the guiding hole 624 of the directing segment 623 toward the switch 61 for actuating the switch 61. The flange portion 634 of the trigger element 63 is formed between the rod 635 and the button 631, is disposed in the base housing 311, and has a dimension lager than that of the mounting hole 312 for preventing the trigger element 63 from departing from the base housing 311.

The biasing member 64 is sleeved on the rod 635, and is sandwiched between the directing segment 623 and the button 631 for biasing the trigger element 63 away from the switch 61 . It should be noted that the biasing member 64 is a compression spring in this embodiment, and can be modified to be an extension spring disposed between the base housing 311 and the trigger element 63.

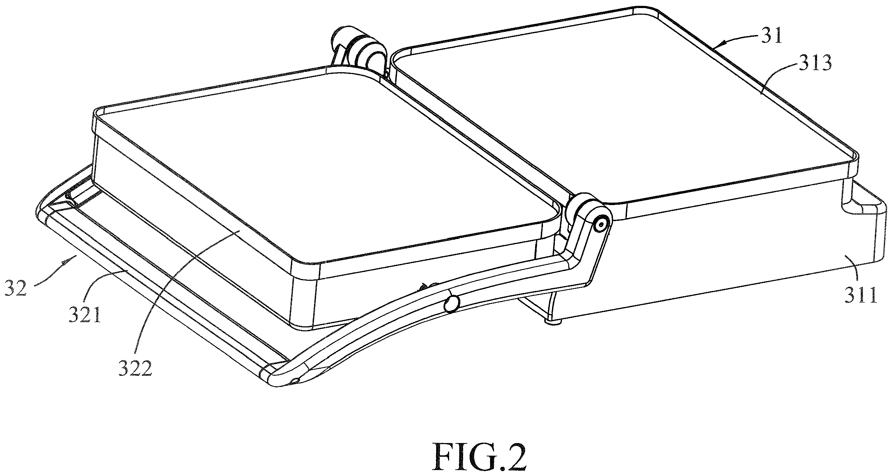

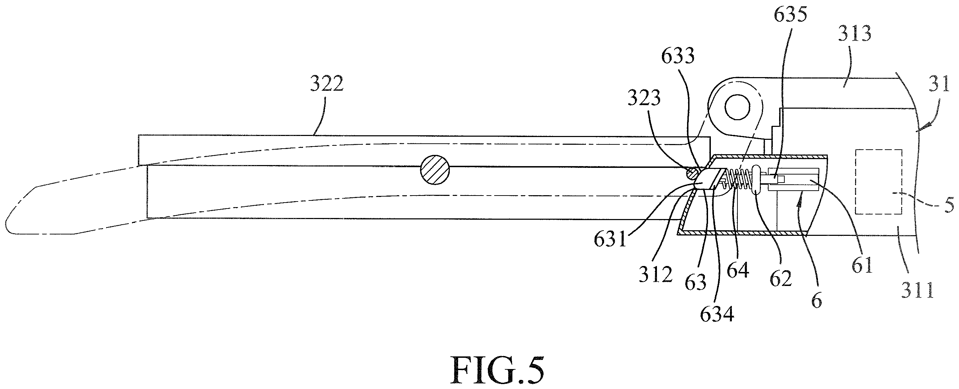

The button 631 of the trigger element 63 is pushed toward the switch 61 by the pushing member 323 to counteract the biasing force of the biasing member 64 during rotation of the second grilling module 32 from the closed position to the open position. When the second grilling module 32 is disposed at the open position (see FIGS. 2 and 5), the switch 61 is pressed and actuated by the rod 635 of the trigger member 63 to turn off the first control module 51 and turn on the second control module 52. At this time, the heating unit 4 is controlled by the second control module 52 to heat the first and second grilling plates 313, 322 with the second heating power.

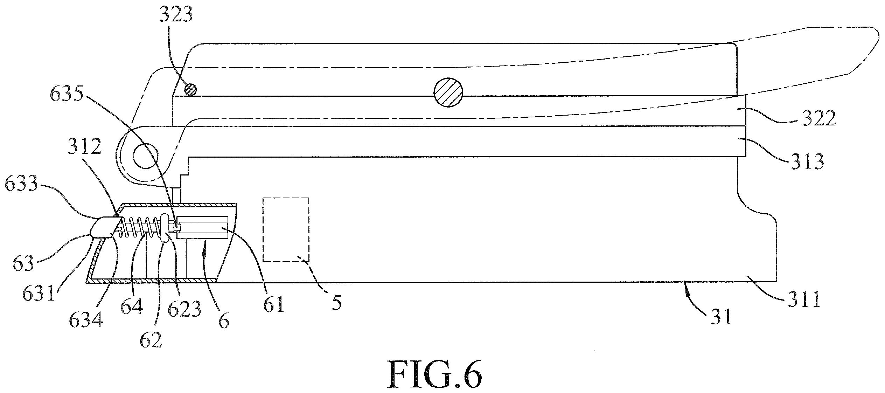

On the other hand, the trigger element 63 is biased by the biasing member 64 away from the switch 61, such that the switch 61 is released from being pushed against by the trigger element 63 and is configured to turn on the first control module 51 and turn off the second control module 52 when the second grilling module 32 is disposed at the closed position with the trigger element 63 released from contact with the pushing member 323 (see FIGS. 1 and 6). The heating unit 4 is then controlled by the first control module 51 to heat the first and second grilling plates 313, 322 with the first heating power.

To sum up, in the present disclosure, by virtue of the controlling unit 5 and the switching unit 6, the heating unit 4 enables the first and second grilling plates 313, 322 to cook food disposed thereon with different heating powers when the second grilling module 32 is disposed at the open and closed positions. By this way, the first and second grilling plates 313, 322 can cook food with the second heating power greater than the first heating power when the second grilling module 32 is disposed at the open position. Accordingly, the temperature of the first and second grilling plates 313, 322 can remain and will not drop when the second grilling module 32 is disposed at the open position, such that the first and second grilling plates 313, 322 can provide sufficient heat for cooking food.

While the present disclosure has been described in connection with what is considered the exemplary embodiment, it is understood that this disclosure is not limited to the disclosed embodiment but is intended to cover various arrangements included within the scope of the appended claims.

## Claims

1. A grill device including:
a grilling unit (3) that includes
a first grilling module (31), and
a second grilling module (32) pivotally connected to said first grilling module (31), and being pivotable with respect to said first grilling module (31) between a closed position, where said second grilling module (32) covers said first grilling module (31), and an open position, where said second grilling module (32) uncovers said first grilling module (31);
a heating unit (4) for heating said first and second grilling modules (31, 32);
a controlling unit (5) that is electrically connected to said heating unit (4) and that includes:
a first control module (51) for enabling said heating unit (4) to heat said first and second grilling modules (31, 32) with a first heating power;
a second control module (52) for enabling said heating unit (4) to heat at least said first grilling module (31) with a second heating power that is greater than the first heating power; and
a switching unit (6) that is mounted to said first grilling module (31), that is configured to be pushed and triggered by said second grilling module (32) to turn on said second control module (52) when said second grilling module (32) is at the open position, and that is configured to turn on said first control module (51) when said switching unit (6) is released from being triggered, said switching unit (6) including
a switch (61) for alternatively turning on said first and second control modules (51, 52),
a trigger element (63) configured to be pushed by said second grilling module (32) to move toward said switch (61) for actuating said switch (61) to turn on said first control module (51) and turn off said second control module (52) when said second grilling module (32) is disposed at the closed position, and configured to actuate said switch (61) to turn off said first control module (51) and turn on said second control module (52) when said second grilling module (32) is disposed at the open position and when said trigger element (63) is released from being pushed, and
a biasing member (64) for biasing said trigger element (63) away from said switch (61); wherein said switch (61) is disposed in said first grilling module (31);
said trigger element (63) includes a button (631) exposed outwardly of said first grilling module (31) and configured to be pushed by said second grilling module (32), and a rod (635) connected to said button (631) and extending into said first grilling module (31) toward said switch (61) for actuating said switch (61);
said switching unit (6) further includes a guiding element (62) including a directing segment (623) that defines a guiding hole (624) through which said rod (635) extends; and
said biasing member (64) is sleeved on said rod (635) and is sandwiched between said directing segment (623) and said button (631) for biasing said trigger element (63)away from said switch (61).

2. The grill device as claimed in claim 1, further **characterized in that** said first grilling module (31) includes a first grilling plate (313), and said second grilling module (32) includes:
a handle (321) pivotally connected to said first grilling module (31), and user-operable to rotate said second grilling module (32) between the open and closed positions;
a second grilling plate (322) mounted fixedly to and co-rotatable with said handle (321), and covering said first grilling plate (313) of said first grilling module (32) when said second grilling module (32) is at the closed position; and
a pushing member (323) mounted on said handle (321) for pushing said trigger element (63) toward said switch (61) to counteract the biasing force of said biasing member (64) during rotation of said second grilling module (32) from the closed position to the open position.

3. The grill device as claimed in claim 1, further **characterized in that** said guiding element (62) further includes a connecting segment (621) that is connected stably to said first grilling module (31), and an interconnecting segment (622) that interconnects said connecting segment (621) and said directing segment (623).

4. The grill device as claimed in claim 1, further **characterized in that**:
said first grilling module (31) includes a base housing (311) formed with a mounting hole (312) through which said rod (635) extends through and from which said button (631) is exposed from;
said trigger element (63) further includes a flange portion (634) formed between said rod (635) and said button (631), disposed in said base housing (311), and having a dimension lager than that of said mounting hole (312) for preventing said trigger element (63) from departing from said base housing (311).

5. The grill device as claimed in claim 4, further **characterized in that** said first grilling module (31) further includes a first grilling plate (313) mounted on said base housing (311), and said second grilling module (32) includes:
a handle (321) pivotally connected to said base housing (311) of said first grilling module (31), and user-operable to rotate said second grilling module (32) between the open and closed positions;
a second grilling plate (322) mounted fixedly to and co-rotatable with said handle (321), and covering said first grilling plate (313) of said first grilling module (32) when said second grilling module (32) is at the closed position; and
a pushing member (323) mounted on said handle (321) for pushing said button (631) of said trigger element (63) toward said switch (61) to counteract the biasing force of said biasing member (64) during rotation of said second grilling module (32) from the closed position to the open position.

6. The grill device as claimed in claim 5, further **characterized in that** said button (631) is configured to have a curved surface (633) facilitating said pushing member (323) of said second grilling module (32) to glidingly push said button (631) during the rotation of said second grilling module (32).

## Patentansprüche

1. Eine Grillvorrichtung, die folgende Merkmale umfasst:
eine Grilleinheit (3), die folgende Merkmale umfasst:
ein erstes Grillmodul (31), und
ein zweites Grillmodul (32), das schwenkbar mit dem ersten Grillmodul (31) verbunden ist und bezüglich des ersten Grillmoduls (31) schwenkbar ist zwischen einer geschlossenen Position, wo das zweite Grillmodul (32) das erste Grillmodul (31) bedeckt, und einer offenen Position, wo das zweite Grillmodul (32) das erste Grillmodul (31) freilegt;
eine Heizeinheit (4) zum Heizen des ersten und zweiten Grillmoduls (31, 32);
eine Steuereinheit (5), die mit der Heizeinheit (4) elektrisch verbunden ist und folgende Merkmale umfasst:
ein erstes Steuermodul (51), um es der Heizeinheit (4) zu ermöglichen, das erste und zweite Grillmodul (31, 32) mit einer ersten Heizleistung zu heizen;
ein zweites Steuermodul (52), um es der Heizeinheit (4) zu ermöglichen, zumindest das erste Grillmodul (31) mit einer zweiten Heizleistung zu heizen, die höher ist als die erste Heizleistung; und
eine Schalteinheit (6), die an dem ersten Grillmodul (31) befestigt ist, die konfiguriert ist, um durch das zweite Grillmodul (32) gedrückt und ausgelöst zu werden, um das zweite Steuermodul (52) einzuschalten, wenn das zweite Grillmodul (32) in der offenen Position ist, und die konfiguriert ist, um das erste Steuermodul (51) einzuschalten, wenn das Auslösen der Schalteinheit (6) aufgehoben ist, wobei die Schalteinheit (6) folgende Merkmale aufweist:
einen Schalter (61) zum abwechselnden Einschalten des ersten und zweiten Steuermoduls (51, 52),
ein Auslöserelement (63), das konfiguriert ist, um durch das zweite Grillmodul (32) gedrückt zu werden, um sich zu dem Schalter (61) hin zu bewegen zum Betätigen des Schalters (61), um das erste Steuermodul (51) einzuschalten und das zweite Steuermodul (52) auszuschalten, wenn das zweite Grillmodul (32) in der geschlossenen Position angeordnet ist, und konfiguriert ist, um den Schalter (61) zu betätigen, um das erste Steuermodul (51) auszuschalten und das zweite Steuermodul (52) einzuschalten, wenn das zweite Grillmodul (32) in der offenen Position angeordnet ist und wenn das Drücken des Auslöserelements (63) aufgehoben ist, und
ein Vorspannungsbauglied (64) zum Vorspannen des Auslöserelements (63) weg von dem Schalter (61); wobei
der Schalter (61) in dem ersten Grillmodul (31) angeordnet ist;
das Auslöserelement (63) einen Knopf (631), der von dem ersten Grillmodul (31) nach außen freigelegt ist, und konfiguriert ist, um durch das zweite Grillmodul (32) gedrückt zu werden, und einen Stab (635) umfasst, der mit dem Knopf (631) verbunden ist und sich in das erste Grillmodul (31) zu dem Schalter (61) hin erstreckt zum Betätigen des Schalters (61);
wobei die Schalteinheit (6) ferner ein Führungselement (62) umfasst, das ein Leitsegment (623) umfasst, das ein Führungsloch (624) definiert, durch das sich der Stab (635) erstreckt; und
wobei das Vorspannungsbauglied (64) auf den Stab (635) geschoben ist und zwischen dem Gleitsegment (623) und dem Knopf (631) angeordnet ist zum Vorspannen des Auslöserelements (63) weg von dem Schalter (61).

2. Die Grillvorrichtung gemäß Anspruch 1, ferner **dadurch gekennzeichnet, dass** das erste Grillmodul (31) eine erste Grillplatte (313) umfasst und das zweite Grillmodul (32) folgende Merkmale umfasst:
einen Griff (321), der schwenkbar mit dem ersten Grillmodul (31) verbunden ist und durch einen Nutzer bedienbar ist, um das zweite Grillmodul (32) zwischen der offenen und geschlossenen Position zu drehen;
eine zweite Grillplatte (322), die fest an dem Griff (321) befestigt ist und mit demselben drehbar ist, und die die erste Grillplatte (313) des ersten Grillmoduls (32) bedeckt, wenn das zweite Grillmodul (32) in der geschlossenen Position ist; und
ein Drückbauglied (323), das an dem Griff (321) befestigt ist zum Drücken des Auslöserelements (63) zu dem Schalter (61) hin, um der Vorspannungskraft des Vorspannungsbauglieds (64) während der Drehung des zweiten Grillmoduls (32) von der geschlossenen Position zu der offenen Position entgegenzuwirken.

3. Die Grillvorrichtung gemäß Anspruch 1, ferner **dadurch gekennzeichnet, dass** das Führungselement (62) ferner ein Verbindungssegment (621) umfasst, das stabil mit dem ersten Grillmodul (31) verbunden ist, und ein Zwischenverbindungselement (622), das eine Zwischenverbindung zwischen dem Verbindungssegment (621) und dem Leitsegment (623) darstellt.

4. Die Grillvorrichtung gemäß Anspruch 1, ferner **dadurch gekennzeichnet, dass**:
das erste Grillmodul (31) ein Basisgehäuse (311) umfasst, das mit einem Befestigungsloch (312) gebildet ist, durch das sich der Stab (635) erstreckt, und von dem der Knopf (631) freigelegt ist;
das Auslöserelement (63) ferner einen Flanschabschnitt (634) umfasst, der zwischen dem Stab (635) und dem Knopf (631) gebildet ist, angeordnet in dem Basisgehäuse (311), und eine Abmessung aufweist, die größer ist als diejenige des Befestigungslochs (312) zum Verhindern, dass sich das Auslöserelement (63) von dem Basisgehäuse (311) entfernt.

5. Die Grillvorrichtung gemäß Anspruch 4, ferner dadurch gekenntzeichnet, dass das erste Grillmodul (31) ferner eine erste Grillplatte (313) umfasst, die auf dem Basisgehäuse (311) befestigt ist, und das zweite Grillmodul (32) folgende Merkmale umfasst:
einen Griff (321), der schwenkbar mit dem Basisgehäuse (311) des ersten Grillmoduls (31) verbunden ist, und durch einen Nutzer bedienbar ist, um das zweite Grillmodul (32) zwischen der offenen und geschlossenen Position zu drehen;
eine zweite Grillplatte (322), die fest an dem Griff (321) befestigt ist und mit demselben drehbar ist, und die die erste Grillplatte (313) des ersten Grillmoduls (32) bedeckt, wenn das zweite Grillmodul (32) in der geschlossenen Position ist; und
ein Drückbauglied (323), das an dem Griff (321) befestigt ist zum Drücken des Knopfs (631) des Auslöserelements (63) zu dem Schalter (61) hin, um der Vorspannungskraft des Vorspannungsbauglieds (64) während der Drehung des zweiten Grillmoduls (32) von der geschlossenen Position zu der offenen Position entgegenzuwirken.

6. Die Grillvorrichtung gemäß Anspruch 5, ferner **dadurch gekennzeichnet, dass** der Knopf (631) konfiguriert ist, um eine gekrümmte Oberfläche (633) aufzuweisen, die es dem Drückbauglied (323) des zweiten Grillmoduls (32) ermöglicht, den Knopf (631) während der Drehung des zweiten Grillmoduls (32) gleitend zu drücken.

## Revendications

1. Dispositif de grill, comportant:
une unité de grillage (3) qui comporte
un premier module de grillage (31), et
un deuxième module de grillage (32) connecté de manière pivotante audit premier module de grillage (31) et pouvant pivoter par rapport audit premier module de grillage (31) entre une position fermée, où ledit deuxième module de grillage (32) recouvre ledit premier module de grillage (31), et une position ouverte, où ledit deuxième module de grillage (32) découvre ledit premier module de grillage (31);
une unité de chauffage (4) destinée à chauffer lesdits premier et deuxième modules de grillage (31, 32);
une unité de commande (5) qui est connectée électriquement à ladite unité de chauffage (4) et qui comporte:
un premier module de commande (51) destiné à permettre que ladite unité de chauffage (4) chauffe lesdits premier et deuxième modules de grillage (31, 32) avec une première puissance de chauffage;
un deuxième module de commande (52) destiné à permettre que ladite unité de chauffage (4) chauffe au moins ledit premier module de grillage (31) avec une deuxième puissance de chauffage qui est supérieure à la première puissance de chauffage; et
une unité de commutation (6) qui est montée sur ledit premier module de grillage (31), qui est configurée pour être poussée et déclenchée par ledit deuxième module de grillage (32) pour activer ledit deuxième module de commande (52) lorsque ledit deuxième module de grillage (32) est en position ouverte, et qui est configuré pour activer ledit premier module de commande (51) lorsque ladite unité de commutation (6) est libérée d'être déclenchée, ladite unité de commutation (6) comportant
un commutateur (61) destiné à activer alternativement lesdits premier et deuxième modules de commande (51, 52),
un élément de déclenchement (63) configuré pour être poussé par ledit deuxième module de grillage (32) pour se déplacer vers ledit commutateur (61) pour actionner ledit commutateur (61) pour activer ledit premier module de commande (51) et désactiver ledit deuxième module de commande (52) lorsque ledit deuxième module de grillage (32) est disposé en position fermée, et configuré pour actionner ledit commutateur (61) pour désactiver ledit premier module de commande (51) et activer ledit deuxième module de commande (52) lorsque ledit deuxième module de grillage (32) est disposé en position ouverte et lorsque ledit élément de déclenchement (63) est libéré d'être poussé, et
un élément de sollicitation (64) destiné à solliciter ledit élément de déclenchement (63) de manière à s'éloigner dudit commutateur (61);
dans lequel
ledit commutateur (61) est disposé dans ledit premier module de grillage (31);
ledit élément de déclenchement (63) comporte un bouton (631) exposé à l'extérieur dudit premier module de grillage (31) et configuré pour être poussé par ledit deuxième module de grillage (32), et une tige (635) connectée audit bouton (631) et s'étendant dans ledit premier module de grillage (31) vers ledit commutateur (61) pour actionner ledit commutateur (61);
ladite unité de commutation (6) comporte par ailleurs un élément de guidage (62) comportant un segment de direction (623) qui définit un trou de guidage (624) à travers lequel s'étend ladite tige (635); et
ledit élément de sollicitation (64) est emmanché sur ladite tige (635) et est pris en sandwich entre ledit segment de direction (623) et ledit bouton (631) pour solliciter ledit élément de déclenchement (63) de manière à s'éloigner dudit commutateur (61).

2. Dispositif de grill selon la revendication 1, **caractérisé par** ailleurs par le fait que ledit premier module de grillage (31) comporte une première plaque de grillage (313), et que ledit deuxième module de grillage (32) comporte:
une poignée (321) connectée de manière pivotante audit premier module de grillage (31) et pouvant être actionnée par l'utilisateur pour faire tourner ledit deuxième module de grillage (32) entre les positions ouverte et fermée;
une deuxième plaque de grillage (322) montée de manière fixe et rotative ensemble avec ladite poignée (321), et recouvrant ladite première plaque de grillage (313) dudit premier module de grillage (32) lorsque ledit deuxième module de grillage (32) est en position fermée; et
un élément de poussée (323) monté sur ladite poignée (321) pour pousser ledit élément de déclenchement (63) vers ledit commutateur (61) pour contrecarrer la force de sollicitation dudit élément de sollicitation (64) pendant la rotation dudit deuxième module de grillage (32) de la position fermée à la position ouverte.

3. Dispositif de grill selon la revendication 1, **caractérisé par** ailleurs par le fait que ledit élément de guidage (62) comporte par ailleurs un segment de connexion (621) qui est connecté de manière stable audit premier module de grillage (31), et un segment d'interconnexion (622) qui connecte entre eux ledit segment de connexion (621) et ledit segment de direction (623).

4. Dispositif de grill selon la revendication 1, **caractérisé par** ailleurs par le fait que:
ledit premier module de grillage (31) comporte un logement de base (311) formé avec un trou de montage (312) à travers lequel s'étend ladite tige (635) et duquel est exposé ledit bouton (631);
ledit élément de déclenchement (63) comporte par ailleurs une partie de bride (634) formée entre ladite tige (635) et ledit bouton (631), disposée dans ledit logement de base (311) et présentant une dimension supérieure à celle dudit trou de montage (312) pour empêcher que ledit élément de déclenchement (63) ne s'éloigne dudit logement de base (311).

5. Dispositif de grill selon la revendication 4, **caractérisé par** ailleurs par le fait que ledit premier module de grillage (31) comporte par ailleurs une première plaque de grillage (313) montée sur ledit logement de base (311), et que ledit deuxième module de grillage (32) comporte:
une poignée (321) connectée de manière pivotante audit logement de base (311) dudit premier module de grillage (31) et pouvant être actionné par l'utilisateur pour faire tourner ledit deuxième module de grillage (32) entre les positions ouverte et fermée;
une deuxième plaque de grillage (322) montée de manière fixe et rotative ensemble avec ladite poignée (321), et recouvrant ladite première plaque de grillage (313) dudit premier module de grillage (32) lorsque ledit deuxième module de grillage (32) est en position fermée; et
un élément de poussée (323) monté sur ladite poignée (321) pour pousser ledit bouton (631) dudit élément de déclenchement (63) vers ledit commutateur (61) pour contrecarrer la force de sollicitation dudit élément de sollicitation (64) pendant la rotation dudit deuxième module de grillage (32) de la position fermée à la position ouverte.

6. Dispositif de grill selon la revendication 5, **caractérisé par** ailleurs par le fait que ledit bouton (631) est configuré de manière à présenter une surface courbe (633) facilitant le fait que ledit élément de poussée (323) dudit deuxième module de grillage (32) pousse par glissement ledit bouton (631) pendant la rotation dudit deuxième module de grillage (32).
